# FASCICULE DE BREVET EUROPEEN

(11) **EP 1 186 227 B1**
(45) Date de publication et mention de la délivrance du brevet: **28.07.2004**
(21) Numéro de dépôt: 01402240.4
(22) Date de dépôt: 28.08.2001
(51) Int. Cl.: A01G 3/02

(54) **Sécateur**
Gartenschere
Garden shears

(30) Priorité: 07.09.2000 FR 0011427
(43) Date de publication de la demande: 13.03.2002
(73) Titulaire: Deville S. A., 49150 Bauge (FR)
(72) Inventeur: Deville, Antoine, 49150 Vieil-Bauge (FR)
(74) Mandataire: Rémont, Claude

(56) Documents cités:
- EP-A- 0 704 150
- CH-A- 96 615
- CH-A- 249 065
- CH-A- 465 954
- DE-U- 20 005 037

## Description

La présente invention concerne un sécateur possédant un dispositif formant frein d'écrou. Ce système permet de régler facilement la force de friction de la lame et de la contre-lame tout en empêchant l'écrou de se dévisser.

On connaît, d'après le document EP-B-0704 150, un sécateur comportant une lame et une contre-lame, solidaires chacune d'une poignée et montées pivotantes autour d'un axe fileté coopérant avec un écrou de serrage de la lame et de la contre lame, l'écrou étant solidaire en rotation d'une roue dentée coaxiale avec l'écrou et engrenée avec un organe denté formant frein fixé sur la contre-lame par une vis de blocage.

Un tel sécateur a l'inconvénient de posséder un écrou de serrage ayant une forme complexe et donc un coût de fabrication élevé. En effet, un tel écrou possède un filetage interne lui permettant d'être vissé sur l'axe de pivotement de la lame et de la contre-lame et un profil externe lui permettant, d'une part, d'être manipulé à l'aide d'un outil du type clé ou pince, et, d'autre part, d'être engrené avec le frein d'écrou.

Un autre inconvénient de ce sécateur est que l'organe formant frein présente une forme de secteur circulaire d'angle au centre petit telle que, pendant le réglage de la friction de la lame et de la contre-lame (déblocage du frein, réglage de l'écrou de serrage et blocage du frein), il se désolidarise facilement de l'écrou. L'utilisateur est alors obligé de démonter l'organe formant frein pour re-engrener l'organe formant frein avec l'écrou. Il en est de même en cas de démontage partiel ou total du sécateur.

La présente invention vise à proposer un sécateur du type précité possédant un système formant frein d'écrou empêchant tout mouvement angulaire et axial de l'écrou et dont le coût de fabrication est réduit. Un autre but de l'invention est d'avoir un organe faisant frein qui reste engrené avec l'écrou de serrage pendant les manipulations de réglage de la friction de la lame et de la contre-lame, que ce réglage soit important ou non.

Suivant l'invention, le sécateur du type précité est caractérisé en ce que la roue dentée est distincte de l'écrou, présente une ouverture axiale dont le contour correspond au contour extérieur de l'écrou de serrage et est adaptée à être insérée autour de l'écrou, l'organe denté formant frein est un pignon denté, et la roue dentée et le pignon denté comprennent des moyens respectifs complémentaires adaptés à retenir la roue dentée autour de l'écrou contre tout déplacement axial lorsque le pignon est engrené avec la roue dentée.

Il est ainsi possible d'utiliser un écrou classique comme écrou de serrage. La roue dentée possède un profil simple, et, surtout, peut être faite en un matériau moins résistant que celui de l'écrou, les contraintes mécaniques qu'elle subit étant beaucoup plus faibles. Une économie importante peut ainsi être réalisée grâce à l'invention. De plus, parce que l'organe denté formant frein est un pignon, celui-ci reste constamment en contact avec la roue dentée pendant les manipulations de réglage de la friction de la lame et de la contre-lame. Enfin, les moyens respectifs complémentaires du pignon et de la roue dentée empêchent tout mouvement axial de la roue dentée, le système d'engrenage bloquant les mouvements angulaires. On obtient ainsi un sécateur comportant un système très simple et très fiable de réglage du serrage de la lame et de la contre-lame.

Suivant un premier mode de réalisation de l'invention, la roue dentée est solidaire d'une rondelle, intercalée entre la roue dentée et la contre-lame du sécateur. Le diamètre de cette rondelle est supérieur au diamètre extérieur des dents la roue. Le pignon est disposé au niveau de la roue dentée, par exemple au moyen d'une seconde rondelle, intercalée entre la contre-lame du sécateur et le pignon.

Ainsi, les dents du pignon recouvrent le bord périphérique de la rondelle, ce qui interdit tout déplacement axial de la roue dentée.

Suivant un second mode de réalisation de l'invention, une bague, co-axiale au pignon est placée de telle sorte que le pignon est compris entre la contre-lame du sécateur et la bague. Cette bague a un diamètre supérieur au diamètre extérieur des dents du pignon.

Ainsi, le bord périphérique de la bague recouvre les dents de la roue dentée et interdit tout déplacement axial de ladite roue dentée

Aux dessins annexés, donnés à titre d'exemple non limitatifs:
- la figure 1 est une vue en perspective, sensiblement de face, d'un sécateur selon un mode de réalisation de l'invention;
- la figure 2 est une vue agrandie en perspective, sensiblement de profil, d'un détail du sécateur de la figure 1;
- la figure 3 est une vue en perspective, sensiblement de trois quart, du détail représenté à la figure 2;
- la figure 4 représente un premier mode de réalisation de l'invention;
- la figure 5 représente un second mode de réalisation de l'invention.

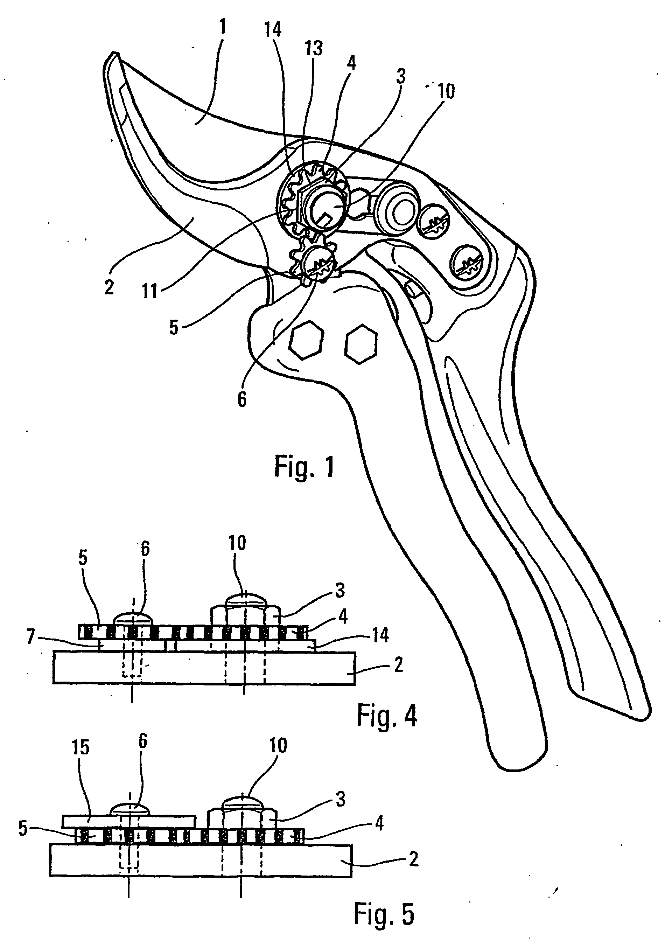

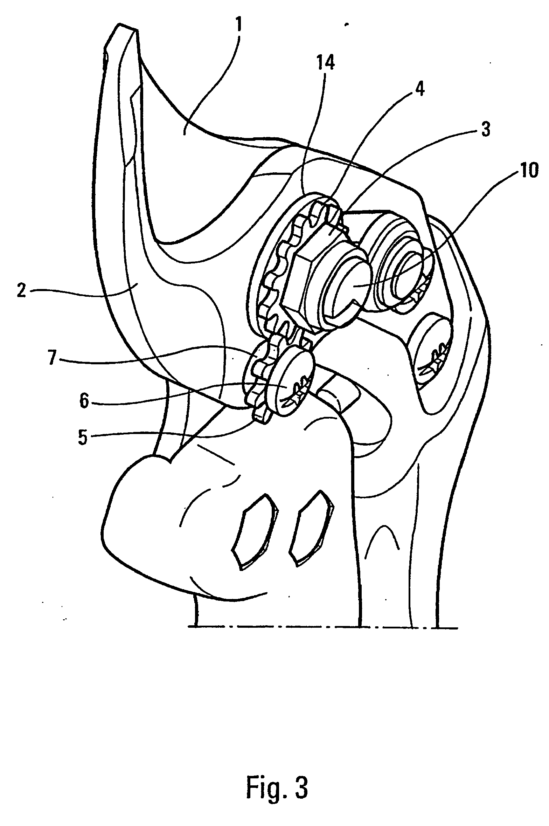

Les figures 1 à 3 montrent un sécateur possédant une lame 1 et une contre-lame 2. Un écrou 3 de serrage de la lame 1 et de la contre-lame 2 est vissé à l'extrémité de l'axe fileté 10 de pivotement de la lame 1 et de la contre-lame 2. Une roue dentée 4 possédant une ouverture axiale 11 dont le contour 12 correspond au contour extérieur 13 de l'écrou de serrage 3 est insérée autour de l'écrou 3 et est ainsi rendue solidaire des mouvements angulaires de l'écrou de serrage 3.

Un système de frein d'écrou constitué par un pignon 5 est fixé à la contre-lame 2 du sécateur par l'intermédiaire d'une vis de blocage 6. Comme le pignon 5 est denté sur toute sa circonférence, il reste engrené dans la roue dentée 4 quelle que soit l'amplitude du mouvement angulaire du serrage ou du desserrage de l'écrou 3.

De cette façon, le serrage du pignon 5 par la vis de blocage 6 sur la contre-lame 2 du sécateur immobilise la roue dentée 4 par effet d'engrenage. Du fait du profil de l'ouverture axiale 11 de la roue dentée 4, l'écrou de serrage 3 est lui même immobile, quels que soient le nombre de tailles effectuées par l'utilisateur du sécateur et la force de serrage de la lame 1 et de la contre-lame 2.

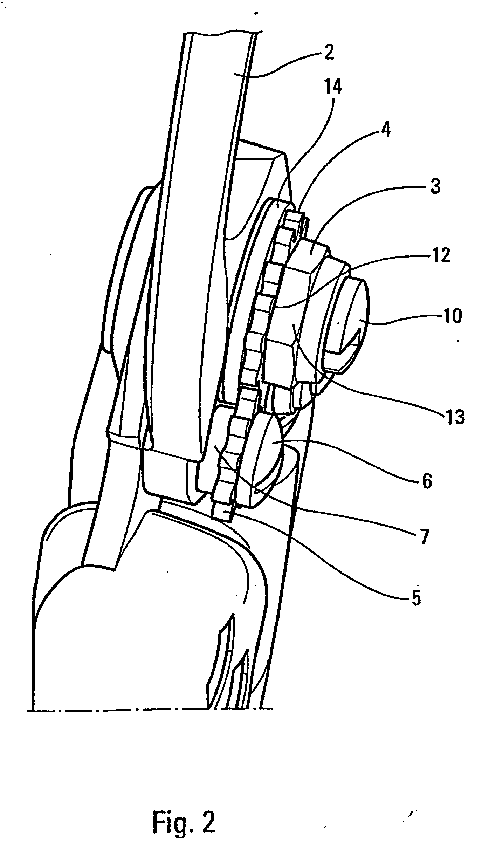

La roue dentée 4 est bloquée axialement par des moyens respectifs complémentaires de la roue dentée 4 et du pignon 5 représentés notamment aux figures 2 à 5.

Selon un premier mode de réalisation de l'invention, comme représenté aux figures 2 à 4, une rondelle 14 solidaire de la roue dentée 4 est intercalée, axialement, entre la roue dentée 4 et la contre-lame 2 du sécateur. Le diamètre de cette rondelle 14 est supérieur au diamètre extérieur des dents de la roue dentée 4. Le pignon 5 est rehaussé à la hauteur de la roue dentée 4 par une seconde rondelle 7. De cette façon, la rondelle 14 est maintenue entre la contre-lame 2 du sécateur et le pignon 5. La roue dentée 4, étant solidaire de la rondelle 14, ne peut se déplacer axialement.

La rondelle 14 peut ainsi être réalisée d'une seule pièce avec la roue dentée 4. En variante, la rondelle 14 peut être distincte de la roue dentée 4 mais solidarisée à celle-ci, par exemple par collage.

Selon un second mode de réalisation de l'invention, comme représenté à la figure 5, il est possible d'utiliser comme moyens empêchant tout mouvement axial de la roue dentée 4 une bague 15, coaxiale au pignon 5, ayant un diamètre supérieur au diamètre extérieur des dents du pignon 5. Cette bague 15 est placée de telle façon que le pignon 5 est compris entre la contre-lame 2 du sécateur et ladite bague 15. De cette façon, la roue dentée 4 maintenue entre la contre-lame 2 du sécateur et la bague 15.

Evidemment, l'invention n'est pas limitée aux modes de réalisation décrits ci-dessus.

Le pignon 5, la roue dentée 4, la rondelle 14, la rondelle 7 et la bague 15 peuvent être réalisés par exemple en matière plastique imprégnée de fibres.

La seconde rondelle 7 peut être d'une seule pièce avec le pignon 5 ou distincte dudit pignon. Elle peut être remplacée par un bossage correspondant ménagé sur la surface de la contre-lame 2.

Le sécateur permet avec une structure simple (écrou classique utilisé comme écrou de serrage), fiable et économique (roue dentée indépendante de l'écrou qui peut être réalisée dans un matériau moins résistant que celui de l'écrou), une rotation de l'écrou sur un tour complet ou plus permettant un nettoyage rapide et approfondi du sécateur et un réglage aisé de celui-ci en maintenant en permanence engrenés l'un dans l'autre le pignon et la roue dentée, c'est-à-dire sans aucun désassemblage des pièces constituantes.

## Revendications

1. Sécateur comportant une lame (1) et une contre-lame (2) solidaires chacune d'une poignée et montées pivotantes autour d'un axe fileté (10) coopérant avec un écrou de serrage (3) de la lame (1) et de la contre-lame (2), l'écrou (3) étant solidaire en rotation d'une roue dentée (4) engrenée avec un organe denté formant frein fixé sur la contre-lame (2) du sécateur par une vis de blocage (6), **caractérisé en ce que** la roue dentée (4) est distincte de l'écrou (3) et présente une ouverture axiale (11) dont le contour (12) correspond au contour extérieur (13) de l'écrou de serrage (3) et est adaptée à être insérée autour de l'écrou (3), **en ce que** l'organe denté formant frein est un pignon denté (5), et **en ce que** la roue dentée (4) et le pignon denté (5) comprennent des moyens respectifs complémentaires adaptés à retenir la roue dentée (4) autour de l'écrou (3) contre tout déplacement axial lorsque le pignon (5) est engrené avec la roue dentée (4).

2. Sécateur selon la revendication 1 **caractérisé en ce que** la roue dentée (4) est solidaire d'une rondelle (14), intercalée entre la contre-lame (2) et la roue dentée (4), dont le diamètre est supérieur au diamètre extérieur des dents de ladite roue (4), **en ce que** le pignon (5) est disposé au niveau de la roue dentée (4), par exemple au moyen d'une seconde rondelle (7) intercalée entre la contre-lame (2) et le pignon (5), et **en ce que** les dents du pignon denté(s) recouvre une partie de la périphérie extérieure de la rondelle placée en regard, lorsque le pignon est engrené avec la roue dentée.

3. Sécateur selon la revendication 2, **caractérisé en ce que** la rondelle (14) est d'une seule pièce avec la roue dentée (4).

4. Sécateur selon la revendication 2, **caractérisé en ce que** la rondelle (14) est distincte de la roue dentée (4) et est solidarisée avec celle-ci, par exemple par collage.

5. Sécateur selon la revendication 1 **caractérisé en ce qu'**il comprend une bague (15), co-axiale au pignon (5), placée de telle sorte que le pignon (5) est compris entre la contre-lame (2) et la bague (15), et ayant un diamètre supérieur au diamètre extérieur des dents du pignon (5), les dents de la roue dentée (4) placées en regard de la bague étant recouvertes par cette bague, en périphérie extérieure, lorsque le pignon (5) est engrené avec la roue dentée.

6. Sécateur selon l'une quelconque des revendications précédentes, **caractérisé en ce que** la roue dentée (4) et le pignon (5), et le cas échéant les rondelles (14, 7) ou la bague (15) sont réalisées en matière plastique imprégnée de fibres.

## Patentansprüche

1. Gartenschere mit einer Klinge (1) und einer Gegenklinge (2), die jeweils fest mit einem Handgriff verbunden sind und drehbar um einen Gewindebolzen (10) montiert sind, der mit einer Spannmutter (3) für die Klinge (1) und die Gegenklinge (2) zusammenwirkt, wobei die Mutter (3) drehfest mit einem Zahnrad (4) ausgebildet ist, das mit einem gezahnten Sicherungselement in Eingriff steht, das auf der Gegenklinge (2) der Gartenschere durch eine Klemmschraube (6) befestigt ist, **dadurch gekennzeichnet, dass** das Zahnrad (4) von der Mutter (3) getrennt ist und eine axiale Öffnung (11) aufweist, deren Kontur (12) der Außenkontur (13) der Spannmutter (3) entspricht und so ausgebildet ist, dass es über die Mutter (3) geschoben werden kann, dass das gezahnte Sicherungselement ein Zahnritzel (5) ist, und dass das Zahnrad (4) und das Zahnritzel (5) jeweils komplementäre Mittel aufweisen, die so ausgebildet sind, dass sie das um die Mutter (3) herum sitzende Zahnrad (4) gegen jede axiale Verstellung zurückhalten, wenn das Ritzel (5) mit dem Zahnrad (4) in Eingriff steht.

2. Gartenschere nach Anspruch 1, **dadurch gekennzeichnet, dass** das Zahnrad (4) mit einer Scheibe (14) fest verbunden ist, die zwischen der Gegenklinge (2) und dem Zahnrad (4) eingesetzt ist, deren Durchmesser größer ist als der Außendurchmesser der Zähne des Rades (4), dass das Ritzel (5) auf der Höhe des Zahnrades (4) angeordnet ist, zum Beispiel mit Hilfe einer zweiten Scheibe (7), die zwischen der Gegenklinge (2) und dem Ritzel (5) eingesetzt ist, und dass die Zähne des Zahnritzels (5) einen Teil des Außenumfangs der gegenüber angeordneten Scheibe überragt, während das Ritzel mit dem Zahnrad in Eingriff steht.

3. Gartenschere nach Anspruch 2, **dadurch gekennzeichnet, dass** die Scheibe (14) mit dem Zahnrad (4) einstückig ist.

4. Gartenschere nach Anspruch 2, **dadurch gekennzeichnet, dass** die Scheibe (14) von dem Zahnrad (4) getrennt ist und mit derselben fest verbunden ist, beispielsweise durch Klebung.

5. Gartenschere nach Anspruch 1, **dadurch gekennzeichnet, dass** diese einen Ring (15) koaxial zum Ritzel (5) aufweist, der derart angeordnet ist, dass das Ritzel (5) zwischen der Gegenklinge (2) und dem Ring (15) aufgenommen ist, und einen größeren Durchmesser als der Außendurchmesser der Zähne des Ritzels (5) aufweist, wobei die Zähne des gegenüber dem Ring angeordneten Zahnrades (4) von diesem Ring am Außenumfang überragt werden, wenn das Ritzel (5) mit dem Zahnrad in Eingriff steht.

6. Gartenschere nach einem der vorstehenden Ansprüche, **dadurch gekennzeichnet, dass** das Zahnrad (4) und das Ritzel (5) und gegebenenfalls die Scheiben (14, 7) oder der Ring (15) aus einem mit Fasern imprägnierten Kunststoffmaterial hergestellt sind.

## Claims

1. secateurs comprising a blade (1) and a counter-blade (2) each fixed to a handle and mounted so as to pivot about a threaded spindle (10) cooperating with a nut (3) for clamping the blade (1) and counter-blade (2), the nut (3) being rotationally fixed to a toothed wheel (4) meshed with a toothed member forming a lock fixed to the counter-blade (2) of the secateurs by a locking screw (6), **characterised in that** the toothed wheel (4) is distinct from the nut (3) and has an axial opening (11) whose contour (12) corresponds to the external contour (13) of the clamping nut (3) and is adapted to be inserted around the nut (3), **in that** the toothed member forming a lock is a toothed pinion (5), and **in that** the toothed wheel (4) and the toothed pinion (5) comprise respective complementary means adapted to hold the toothed wheel (4) around the nut (3) counter to any axial movement when the pinion (5) is meshed with the toothed wheel (4).

2. Secateurs according to Claim 1, **characterised in that** the toothed wheel (4) is fixed to a washer (14), interposed between the counter-blade (2) and the toothed wheel (4), whose diameter is greater than the outside diameter of the teeth on the said wheel (4), **in that** the pinion (5) is disposed level with the toothed wheel (4), for example by means of a second washer (7) interposed between the counter-blade (2) and the pinion (5), and **in that** the teeth on the toothed pinion (5) cover part of the external periphery of the washer placed opposite, when the pinion is meshed with the toothed wheel.

3. Secateurs according to Claim 3, **characterised in that** the washer (14) is in a single piece with the toothed wheel (4).

4. Secateurs according to Claim 2, **characterised in that** the washer (14) is distinct from the toothed wheel (4) and is fixed to it, for example by adhesive bonding.

5. Secateurs according to Claim 1, **characterised in that** they comprise a ring (15), coaxial with the pinion (5), placed so that the pinion (5) lies between the counter-blade (2) and the ring (15), and having a diameter greater than the outside diameter of the teeth on the pinion (5), the teeth on the toothed wheel (4) placed opposite the ring being covered by this ring, at the external periphery, when the pinion (5) is meshed with the toothed wheel.

6. Secateurs according to any one of the preceding claims, **characterised in that** the toothed wheel (4) and the pinion (5), and where applicable the washers (14, 7) or the ring (15), are produced from plastics material impregnated with fibres.
